(19) Europäisches Patentamt

European Patent Office

Office européen des brevets

(11) **EP 1 707 459 A2**

(12) **EUROPÄISCHE PATENTANMELDUNG**

(43) Veröffentlichungstag:
04.10.2006 Patentblatt 2006/40

(51) Int Cl.:
***B60S 1/34*** *(2006.01)*

(21) Anmeldenummer: 06006341.9

(22) Anmeldetag: 28.03.2006

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **31.03.2005 DE 102005015038**
**06.07.2005 DE 102005031503**

(71) Anmelder: **Valeo Systèmes d'Essuyage**
**78321 La Verrière (FR)**

(72) Erfinder:
• **Egner-Walter, Bruno**
**74076 Heilbronn (DE)**
• **Schäuble, Michael**
**71665 Vaihingen/Enz (DE)**
• **Wondratschek, Frank**
**70376 Stuttgart (DE)**

(74) Vertreter: **Jahn, Wolf-Diethart**
**Valeo Wischersysteme GmbH,**
**Poststrässle 10**
**74321 Bietigheim-Bissingen (DE)**

(54) **Scheibenwischer**

(57)      Die Erfindung bezieht sich auf eine neuartige Ausbildung eines Scheibenwischers für Fahrzeugscheiben, insbesondere für Panoramascheiben von Fahrzeugen, mit einem zumindest zwischen einer Parkstellung und Umkehrstellung schwenkbaren Wischarm, mit wenigstens einem an einem Ende des Wischarmes vorgesehenen Wischblatt, welches beim Schwenken des Wischarmes ein Wischfeld der Fahrzeugscheibe überstreicht und welches an einem seitlich von dem Wischarm wegstehenden Wischblattträger angeordnet ist, wobei der Wischblattträger um eine Schwenkachse schwenkbar mit dem Wischarm verbunden ist, sowie mit Federmitteln zum Anpressen des Wischblattes gegen die Fahrzeugscheibe.

**FIG.1**

## Beschreibung

Die Erfindung bezieht sich auf einen Scheibenwischer gemäß Oberbegriff Patentanspruch 1, 2, 3 oder 4.

Scheibenwischer oder Scheibenwischeranlagen für Fahrzeuge sind in verschiedenen Ausführungen bekannt und bestehen im einfachsten Fall aus einem durch einen Scheibenwischerantrieb schwenkbar angetriebenen Wischarm und aus wenigstens einem Wischblatt am Wischarm. Für eine möglichst gute Wischqualität wird angestrebt, dass beim Überwischen oder Überstreichen eines Wischfeldes mit dem jeweiligen Wischblatt dessen Wischblattebene, d.h. die Längsmittelebene des Wischblattes möglichst senkrecht zur Scheibenoberfläche bzw. möglichst senkrecht zu einer Ebene orientiert ist, die die Scheibenwölbung auf der jeweiligen Berührungslinie mit dem Wischblatt tangiert, oder aber dass das Wischblatt allenfalls gegenüber dieser optimalen "Normallage" geringfügig geneigt ist.

Speziell bei panoramaförmig ausgebildeten Fahrzeugscheiben, die an ihren den A-Säulen des Fahrzeugs benachbarten, einander gegenüberliegenden Rändern besonders stark gewölbt sind, lässt sich diese Normallage in dem von dem jeweiligen Wischfeld mit eingeschlossenen Randbereich nur mit zusätzlichen Maßnahmen erreichen.

Vorgeschlagen wurde hierfür bereits ein Scheibenwischer (GB 853 516), bei dem an dem freien Ende des Wischarmes ein von diesem seitlich wegstehender und als Wischblattträger dienender Hilfsarm vorgesehen ist, der um eine Achse parallel zur Längserstreckung des Wischarmes an diesem angelenkt ist und durch Federmittel für ein Schwenken in Richtung auf die Fahrzeugscheibe vorgespannt ist, so dass das an dem Hilfsarm vorgesehene Wischblatt gegen die Fahrzeugscheibe anliegt und beim Wischvorgang unter Schwenken des Hilfsarmes dem Verlauf der Scheibenoberfläche derart folgt, dass die angestrebte Normallage für das Wischblatt auch in dem jeweiligen stark gekrümmten Randbereich der panoramaförmigen Fahrzeugscheibe zumindest nahezu beibehalten wird.

Aufgabe der Erfindung ist es, einen Scheibenwischer für panoramaförmig ausgebildete Fahrzeugscheiben aufzuzeigen, der eine noch weiter verbesserte Wischqualität gewährleistet. Zur Lösung dieser Aufgabe ist ein Scheibenwischer entsprechend dem Patentanspruch 1 oder 2 oder 3 oder 4 ausgebildet.

Entsprechend einer Ausführungsform der Erfindung ist der vorzugsweise von dem Hilfsarm gebildete Wischblattträger nicht nur um eine erste Schwenkachse schwenkbar mit dem Wischarm verbunden und durch erste Federmittel mit seinem das wenigstens eine Wischblatt tragenden Ende in Richtung Fahrzeugscheibe vorgespannt, sondern zugleich auch um eine zweite Schwenkachse, die senkrecht oder etwa senkrecht zur Oberfläche der Fahrzeugscheibe orientiert ist und um die der Wischblattträger in Abhängigkeit des Schwenkwinkels des Wischarmes verschwenkt wird, und zwar gesteuert durch einen zusätzlich zum Wischarm vorgesehenen Steuerarm. Hierdurch wird erreicht, dass das Wischblatt beim Überstreichen des Wischfeldes nicht nur die Normallage auch im stark gewölbten Randbereich der Fahrzeugscheibe aufweist, sondern auch dort mit seiner Längserstreckung möglichst parallel zu den Krümmungsachsen der Fahrzeugscheibe liegt, insbesondere auch möglichst parallel zur Scheitellinie des Übergangs zwischen dem stark gewölbten Randbereich einer Panoramascheibe und dem übrigen Bereich dieser Scheibe, so dass das Wischblatt selbst in diesem kritischen Bereich über seine gesamte Länge eine optimale Wischqualität sicherstellt.

Bei einer weiteren Ausführungsform der Erfindung ist die erste Schwenkachse gegenüber der Längserstreckung des Wischarmes und gegenüber der Längserstreckung des Wischblattes geneigt, so dass diese Schwenkachse sowohl mit der Längserstreckung des Wischblattes als auch mit der Längserstreckung des Wischarmes jeweils einen Winkel einschließt. Bevorzugt ist die Schwenkachse gegenüber der Längserstreckung des Wischblattes gedreht ist, so dass die Schwenkachse zugleich schräg zur Oberfläche der Fahrzeugscheibe verläuft.

Bei einer weiteren Ausführungsform der Erfindung ist der Radius, mit dem das wenigstens eine am Wischblattträger vorgesehene Wischblatt bzw. der unmittelbar am Wischblattträger vorgesehene Abschnitt dieses Wischblattes um die Schwenkachse des Wischblattträgers schwenkbar ist, in Abhängigkeit vom Krümmungsradius oder vom Mittelwert der Krümmungsradien gewählt, die die Fahrzeugscheibe in dem wenigstens einen stärker gekrümmten Scheibenbereich (Randbereich) aufweist, und zwar derart, dass das Wischblatt auch beim Überstreichen dieses Rand- oder Scheibenbereichs die angestrebte Normallage aufweist oder zumindest annähernd aufweist.

Bei einer weiteren Ausführungsform der Erfindung ist an dem durch zweite Federmittel in Richtung auf die Fahrzeugscheibe vorgespannten Wischarm ein gegen die Fahrzeugscheibe anliegendes Abstützelement vorgesehen, über welches ein definierter Abstand zwischen Wischarm und Fahrzeugscheibe beim Wischvorgang bzw. beim Schwenken des Wischarmes eingehalten wird und der Wischarm beim Schwenken der Kontur der Scheibenoberfläche folgt. Diese Ausführung ist speziell bei solchen Panoramascheiben von Vorteil, die zwischen ihren Randbereichen ebenfalls eine nicht unerhebliche Wölbung aufweisen.

Selbstverständlich können Merkmale der verschiedenen Ausführungsformen auch beliebig kombiniert werden. Weiterbildungen der Erfindung sind Gegenstand der Unteransprüche. Die Erfindung wird im Folgenden anhand der Figuren an Ausführungsbeispielen erläutert. Es zeigen:

Fig. 1        in vereinfachter Teildarstellung eine Draufsicht auf eine Fahrzeugfront- oder -panoramascheibe, zusammen mit einem Scheibenwischer gemäß der Erfindung;

Fig. 2        einen Schnitt entsprechend der Linie I - I der Figur 1;

Fig. 3     eine Darstellung ähnlich Figur 1 bei einer weiteren möglichen Ausführungsform der Erfindung;

Fig. 4     einen Schnitt entsprechend der Linie II - II der Figur 3;

Fig. 5     eine Darstellung ähnlich wie Figur 1 bei einer weiteren möglichen Ausführungsform der Erfindung;

Fig. 6     einen Schnitt entsprechend der Linie III - III der Figur 5;

Fig. 7     in vereinfachter Darstellung nochmals eine Draufsicht auf eine Fahrzeugfront- oder -panoramascheibe, zusammen mit einem Scheibenwischer gemäß der Erfindung;

Fig. 8     einen Schnitt durch die Fahrzeugscheibe, zusammen mit dem am Wischarm angelenkten und das Wischblatt tragenden Wischblattträger oder Hilfsarm des Scheibenwischers der Figur 7;

Fig. 9 und 10     jeweils den am Wischarm angelenkten Wischblattträger oder Hilfsarm mit Wischblatt, zusammen mit der Fahrzeugscheibe im Schnitt bei unterschiedlichen Ausführungsformen;

Fig. 11     in einer Darstellung wie Figur 7 eine weitere mögliche Ausführungsform des erfindungsgemäßen Scheibenwischers.

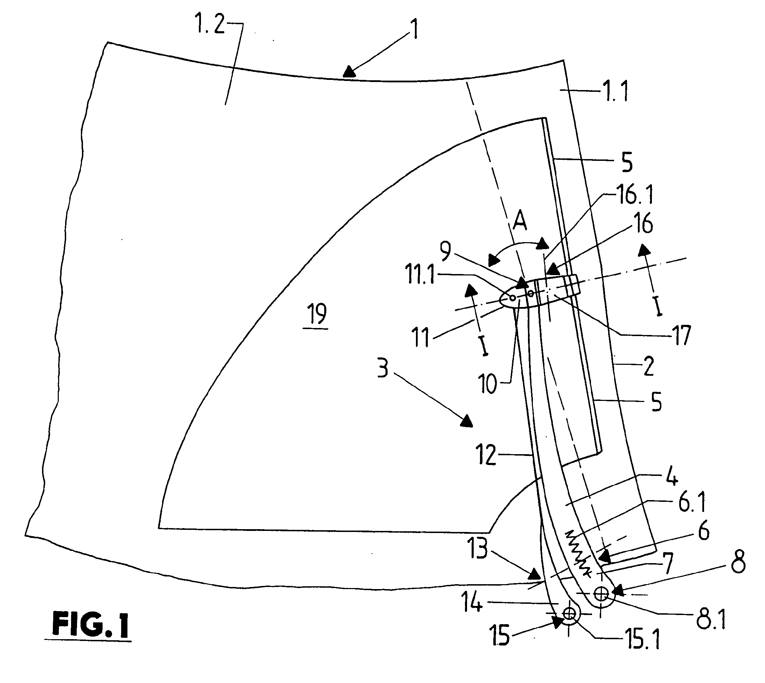

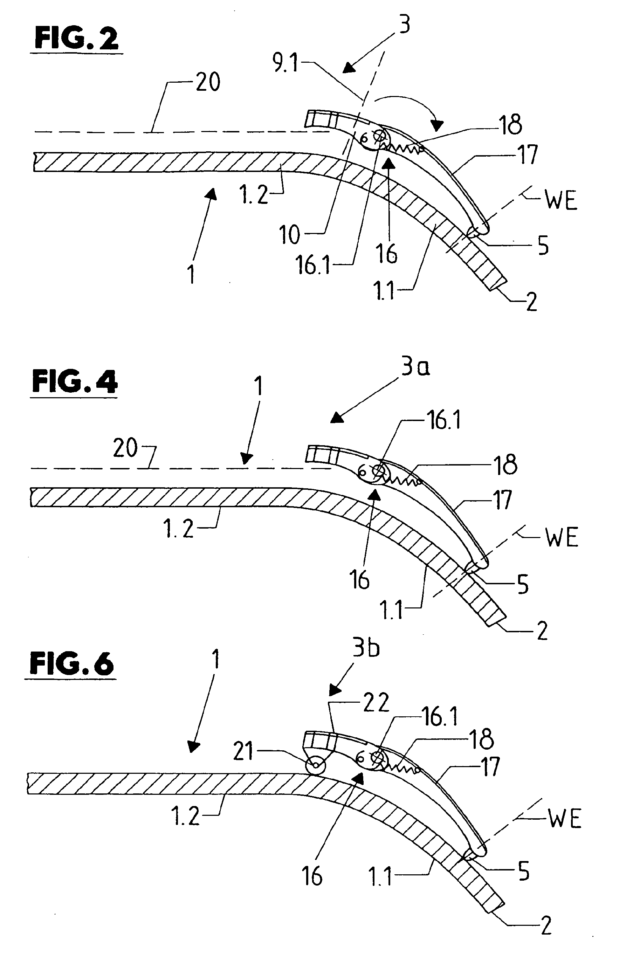

In den Figuren ist 1 eine Fahrzeugfrontscheibe in Form einer Panoramascheibe, die zumindest an ihren beiden, der sogenannten A-Säule benachbarten Rändern 2 oder an dortigen Randbereichen 1.1 an der Außenseite weit stärker konvex gekrümmt ist als in dem dazwischen liegenden Bereich 1.2. Bei der Ausführungsform der Figuren 1 und 2 ist die Panoramascheibe 1 im Bereich 1.2 plan oder im Wesentlichen plan ausgebildet, wie dies in der Figur 2 dargestellt ist.

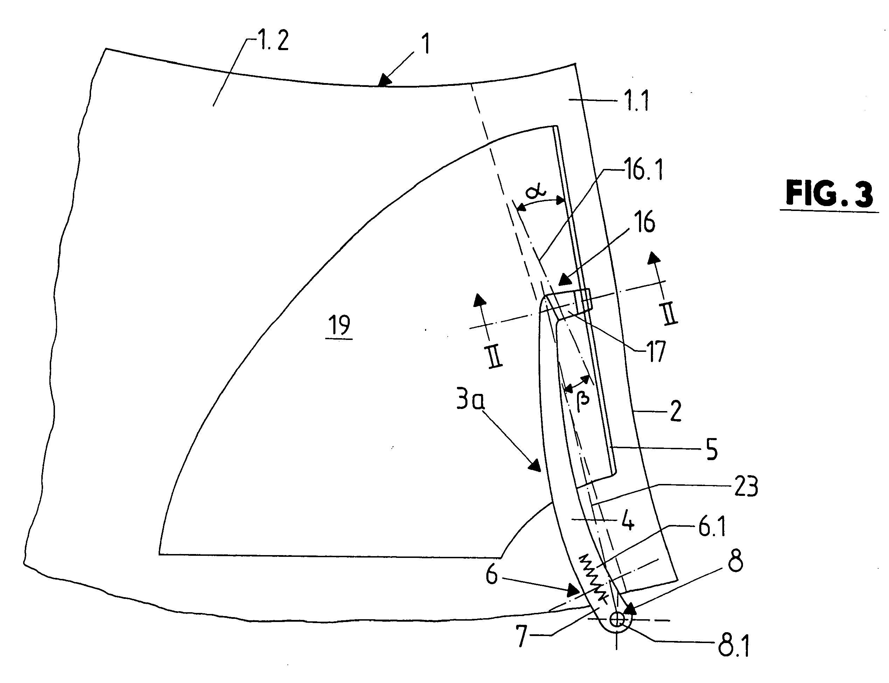

Mit 3 ist in Figur 1 allgemein ein Scheibenwischer bezeichnet, der Teil einer z.B. zwei derartige Scheibenwischer 3 aufweisenden Wischanlage ist und u. a. aus dem Wischarm 4 und dem Wischblatt 5 besteht. Der Wischarm 4 ist an einem Ende über ein Gelenk 6 mit einem Wischarmträger 7 verbunden, der seinerseits auf der durch den Wischermotor der Wischanlage reversierend angetriebenen Wischwelle 8 befestigt ist, deren Achse die Wischerachse 8.1 definiert, um die der Wischarm 4 bei eingeschaltetem Wischermotor schwenkt. Bei der dargestellten Ausführungsform ist die Achse des Gelenks 6 senkrecht oder nahezu senkrecht zu der Längserstreckung des Wischarmes 4, die in Figur 3 mit einer Hilfslinie 23 angedeutet bzw. verdeutlicht ist, sowie parallel zu der Ebene der Panoramascheibe 1 bzw. des planen oder nahezu planen Bereichs 1.2 dieser Scheibe orientiert.

An dem dem Gelenk 6 entfernt liegenden freien Ende des Wischarmes 4 ist über ein eine Schwenkachse 9.1 bildendes Gelenk 9 ein Hilfsarmträger 10 angelenkt, der seinerseits über ein eine Schwenkachse 11.1 bildendes Gelenk 11 mit dem freien Ende eines Steuerarmes 12 gelenkig verbunden ist, dessen anderes Ende über ein Gelenk 13 an einem Steuerarmträger 14 angelenkt ist. Zumindest in der Ausgangs- oder Parkstellung des Scheibenwischers 3 sind die Gelenke 6 und 13 mit ihren Gelenkachsen achsgleich angeordnet. Der Steuerarmträger 14 ist über ein eine Schwenkachse 15.1 bildendes Gelenk 15 gelenkig mit der Fahrzeugkarosserie bzw. mit einem dortigen Gelenkträger verbunden ist. Die Schwenkachsen 9.1, 11.1 und 15.1 liegen parallel zueinander und parallel zur Achse der Wischwelle 8 und bilden so ein Gelenkviereck in der Weise, dass der Hilfsarmträger 10 beim Schwenken des Wischarmes 4 zwischen seiner Parkstellung und seiner Umkehrstellung durch den Steuerarm 12 gesteuert um die Schwenkachse 9.1 schwenkt, wie dies in der Figur 1 mit dem Doppelpfeil A angedeutet ist.

An dem Hilfsarmträger 10 ist mit einem eine Schwenkachse 16.1 bildenden Gelenk 16 ein Wischblattträger oder Hilfsarm 17 mit einem Ende angelenkt, der mit seiner Längserstreckung radial zur Schwenkachse 16.1 liegt und seitlich von dem Wischarm 4 wegsteht und an seinem anderen Ende das Wischblatt 5 trägt. Dieses ist mit seiner Längserstreckung rechtwinklig zur Längserstreckung des Hilfsarmes 17 orientiert und bei der dargestellten Ausführungsform auch parallel zur Schwenkachse 16.1. Weiterhin ist das Wischblatt 5 etwa in seiner Mitte mit dem Hilfsarm 17 verbunden, so dass es um eine quer zum Wischblatt verlaufende Achse relativ zum Hilfsarm 17 verschwenkbar ist.

Bei dem Scheibenwischer 3 befindet sich das Gelenk 16 an der dem Gelenk 11 abgewandten Seite des Gelenks 9, und zwar an derjenigen Seite, die bei in der Umkehrstellung befindlichem Wischblatt 5 der A-Säule bzw. dem betreffenden Fahrzeugscheibenrand 2 näher liegt. Auch der Hilfsarm 17 steht über diese Seite des Hilfsarmträgers 10 weg.

Die Schwenkachse 16.1 des Gelenks 16 liegt parallel zur Ebene der Fahrzeug-oder Panoramascheibe 1 und auch parallel oder in etwa parallel zu einer gedachten Verbindungslinie zwischen der Achse der Wischwelle 8 und der Schwenkachse 9.1 des Gelenks 9.

Durch eine Feder 18, die zwischen dem Hilfsarmträger 10 und dem Hilfsarm 17 wirkt, wird das Wischblatt 5 mit der erforderlichen Kraft gegen die Fahrzeugscheibe 1 angedrückt. Eine weitere dem Gelenk 6 zugeordnete Feder 6.1 wirkt zwischen dem Wischarmträger 7 und dem Wischarm 4, um diesen mit seinem freien, gelenkig mit dem Hilfsarmträger 10 verbundenen Ende um die Schwenkachse des Gelenks 6 in Richtung Fahrzeugscheibe vorzuspannen. Das Gelenk 6 ist bei dieser Ausführung so ausgebildet, dass es zwar ein Wegschwenken des Wischarmes 4 von der Fahrzeugscheibe für Servicezwecke ermöglicht, die Schwenkbewegung des Wischarmes 4 in Richtung Fahrzeugscheibe aber durch einen Anschlag im Gelenk 6 so begrenzt ist, dass der Wischarm 4 über seine gesamte Länge stets einen ausreichenden Abstand von der Fahrzeugscheibe 1 aufweist.

Durch die Befestigung des Wischblattes 5 am Hilfsarm 17, der beim Schwenken des Wischarmes 4 aus der Parkstellung in die Umkehrstellung dem Wischarm 4 vorauseilt und beim Schwenken aus der Umkehrstellung in die Parkstellung dem Wischarm 4 nacheilt, und durch die gelenkige Verbindung (Gelenk 16) des Hilfsarmes 17 mit dem Hilfsarmträger 10, ist erreicht, dass das Wischblatt 5 mit seiner Wischblattebene WE, die die Längserstreckung des Wischblattes 5 einschließt, insbesondere auch in dem Randbereich 1.1, möglichst senkrecht zur Außenfläche der Fahrzeugscheibe orientiert ist, d.h. die angestrebte Normallage aufweist.

Mit dem zusätzlichen gesteuerten Schwenken des Hilfsarmträgers 10 (gesteuert durch den Steuerarm 12) und damit des Hilfsarmes 17 und des Wischblattes 5 um die Schwenkachse 9.1 des Gelenks 9 wird weiterhin erreicht, dass das Wischblatt 5 mit seiner Längserstreckung jeweils parallel oder möglichst parallel zu dem Krümmungsradius der Fahrzeugscheibe insbesondere auch im Randbereich 1.1 orientiert ist, so dass hierdurch das Wischblatt 5 über seine gesamte Länge gegen die Fahrzeugscheibe zuverlässig anliegt, und zwar mit möglichst gleichmäßiger Kraftverteilung, und ein optimaler Wischeffekt über das gesamte vom Wischblatt 5 überstrichene und den Randbereich 1.1 einschließende Wischfeld 19 erreicht wird. Weiterhin liegt das Wischblatt 5 in der Umkehrstellung parallel oder möglichst parallel zur benachbarten A-Säule.

Beim Schwenken des Wischarmes 4 bewegen sich der Hilfsträger 10 bzw. das Gelenk 16 in einer planen Ebene parallel oder im Wesentlichen parallel zur Ebene des planen Bereichs 1.2 der Fahrzeugscheibe, wie dies mit der unterbrochenen Linie 20 in der Figur 2 angedeutet ist. Durch Schwenken des Hilfsarmes 17 um die Schwenkachse 16.1 folgt das Wischblatt 5 der Kontur der Außenfläche der Fahrzeugscheibe 1.

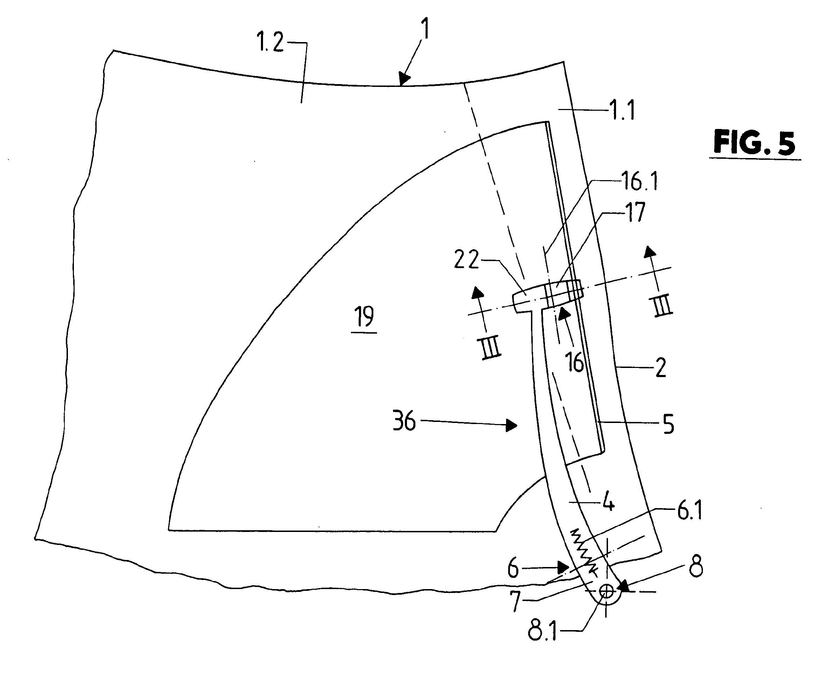

Die Figuren 3 und 4 zeigen als weitere mögliche Ausführungsform einen Scheibenwischer 3a, der sich von dem Scheibenwischer 3 im Wesentlichen dadurch unterscheidet, dass der Hilfsarm 17 mittels des Gelenkes 16 unmittelbar an dem freien Ende des Wischarmes 4 angelenkt ist und das Wischblatt 5 durch die zwischen Wischarm 4 und dem Hilfsarm wirkende Feder 18 in Richtung auf die Fahrzeugscheibe 1 vorgespannt ist. Der Hilfsarmträger 10 und der diesen Hilfsarmträger steuernde Steuerarm 12 sind bei dieser Ausführungsform entfallen.

Wie die Figur 3 zeigt, ist das Gelenkt 16 bei dieser Ausführungsform so ausgebildet, dass dessen Schwenkachse 16.1 nicht parallel zur Längserstreckung des Wischblattes 5 orientiert ist, sondern mit dieser Längserstreckung sowie auch mit der durch die Hilfslinie 23 verdeutlichte Längserstreckung des Wischarmes 4 einen spitzen Winkel $\alpha$ bzw. einen spitzen Winkel $\beta$ einschließt. Weiterhin besteht bei dieser Ausführung die Möglichkeit, dass die Schwenkachse 16.1 auch gegenüber der Oberfläche der Fahrzeugscheibe und/oder gegenüber der Wischblattebene WE geneigt ist. Die Lage der Schwenkachse 16.1 ist dabei so gewählt, dass das Wischblatt 5 beim Überstreichen des Wischfeldes 19 mit seiner Wischblattebene WE möglichst senkrecht zur Fahrzeugscheibe 1 orientiert ist und über die gesamte Länge des Wischblattes 5 ein möglichst gleichmäßiger Wischeffekt erreicht wird, beispielsweise durch eine entsprechende Verteilung der Kraft, mit der das Wischblattes 5 gegen die Fahrzeugscheibe angepresst ist, und/oder durch eine Führung des Wischblattes 5 in der Weise, dass dessen Wischblattebene WE beim Überstreichen des Wischfeldes 19, insbesondere auch in dem stark gekrümmten Randbereich 1.1, stets parallel oder möglichst parallel zur Achse der Krümmung liegt.

Auch bei dem Scheibenwischer 3a ist das Gelenk 6 wiederum so ausgebildet, dass es zwar ein Wegschwenken des Wischarmes 4 von der Fahrzeugscheibe 1 für Servicezwecke ermöglicht, durch den Anschlag im Gelenk 6 aber wiederum dafür gesorgt ist, dass der Wischarm 4 beim Wischen stets den vorgegebenen Abstand von der Fahrzeugscheibe aufweist, das Gelenk 6 und die zugehörige, zwischen dem Wischarmträger 7 und dem Wischarm 4 wirkende Feder für den Wischvorgang nicht aktiv ist.

Vorstehend wurde davon ausgegangen, dass bei dem Scheibenwischer 3 oder 3a der Wischarm 4 und - soweit vorhanden - der Steuerarm 12 über ihre Gelenke 6 und 13 für Servicezwecke jeweils von der Fahrzeugscheibe wegklappbar sind. Grundsätzlich besteht aber auch die Möglichkeit, auf die Gelenke 6 und 13 zu verzichten, d. h. den Wischarm 4 direkt an der Wischwelle 8 anzubringen und den Steuerarm 12 direkt mit dem Gelenk 15 an einem fahrzeugseitigem Gelenkträger anzulenken, und zwar derart, dass über den gesamten Schwenkbereich des Wischarmes 4 dieser sowie auch der Steuerarm 12 einen ausreichenden Abstand von der Fahrzeugscheibe 1 aufweisen. Über das Gelenk 16 ist dann für Servicezwecke ein Wegschwenken des Hilfsarmes 17 und des Wischblattes 5 von der Fahrzeugscheibe 1 möglich.

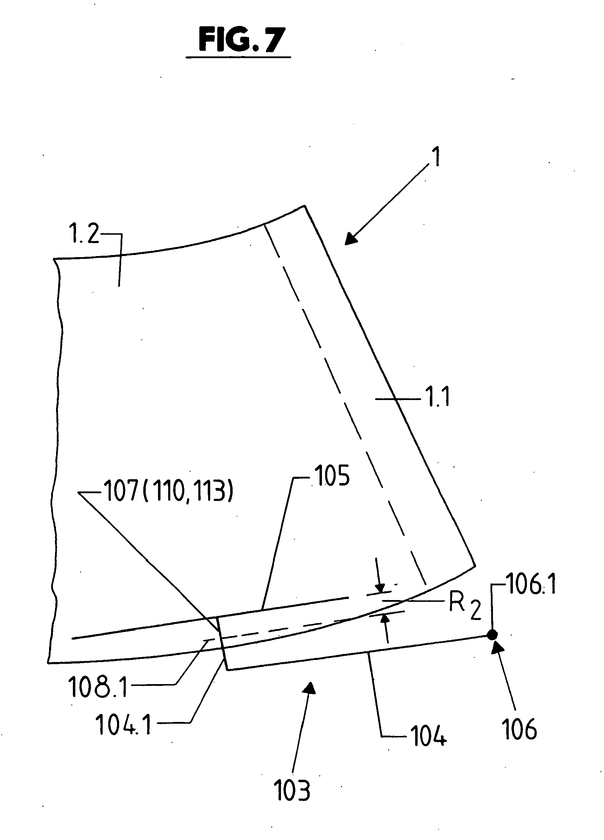

Die Figuren 5 und 6 zeigen als weitere mögliche Ausführungsform einen Scheibenwischer 3b, der sich vom Scheibenwischer 3a im Wesentlichen dadurch unterscheidet, dass der Wischarm 4 an seinem freien Ende mit einem Abstützelement, d.h. im gezeigten Ausführungsbeispiel mit einer Stützrolle 21, versehen ist, und zwar bei der dargestellten Ausführungsform an einem Ausleger 22, der Teil des Wischarmes 4 ist oder mit diesem fest verbunden ist und der über die dem Hilfsarm 17 abgewandte Seite des Wischarmes 4 seitlich wegsteht. Mit der Stützrolle 21 liegt der Wischarm 4 gegen die Außenfläche der Fahrzeugscheibe 1 an, so dass mit der Stützrolle 21 beim Schwenken des Wischarmes 4 ein definierter Abstand zwischen diesem Wischarm und der Fahrzeugscheibe 1 gewährleistet ist. Das Gelenk 6 und die zugehörige Feder 6.1 sind hierfür aktiv, d.h. die Stützrolle 21 liegt aufgrund der von der Feder 6.1 erzeugten Kraft gegen die Außenfläche der Fahrzeugscheibe an. Abweichend von dem Scheibenwischer 3 oder 3a weist das Gelenk 6 des Scheibenwischers 3b den Anschlag im Gelenk 6 zur Begrenzung der Schwenkbewegung des Wischarmes 4 in Richtung Fahrzeugscheibe 1 nicht auf.

Die Federn 6.1 und 18 sind so aufeinander abgestimmt, dass durch die von der Feder 18 erzeugte Federkraft das Wischblatt 5 über seine gesamte Länge mit ausreichender Kraft gegen die Fahrzeugscheibe anliegt, ohne das die Stützrolle 21 von der Fahrzeugscheibe abhebt.

Entsprechend der Darstellung der Figur 5 ist die Schwenkachse 16.1 des Gelenks 16, welches wiederum den Hilfsarm 17 gelenkig mit dem Wischarm 4 verbindet, parallel zur Ebene der Fahrzeugscheibe und parallel zur Längserstreckung des Wischblattes 5 orientiert. Eine andere Orientierung der Schwenkachse 16.1 ist aber möglich.

Der Scheibenwischer 3b ist insbesondere für die Verwendung bei solchen Fahrzeugscheiben 1 vorteilhaft, die auch im Bereich 1.2 stark gewölbt sind. Durch die Stützrolle 21 und durch die Ausbildung des Gelenks 6 ohne den die Schwenkbewegung des Wischarmes in Richtung Fahrzeugscheibe 1 begrenzenden Anschlag ist erreicht, dass der Wischarm 4 an seinem den Hilfsarm 17 aufweisenden Ende beim Wischvorgang der Kontur der Außenfläche der Fahrzeugscheibe unter Beibehaltung eines ausreichenden Abstandes folgt. Bei den Scheibenwischern 3 und 3a mit dem während des Wischvorgangs nicht wirksamen Gelenk 6 ist dies nicht der Fall, d. h. das mit dem Hilfsarm 17 versehene Ende des Wischarmes 4 bewegt sich dort in einer von der Kontur der Fahrzeugscheibe unabhängigen, von der Fahrzeugscheibe aber ausreichend beabstandeten Ebene. Bei Fahrzeugscheiben, die auch außerhalb der Randbereiche 1.1 stark gekrümmt sind, würde dies dazu führen, dass der Wischarm 4 an seinem mit dem Hilfsarm 17 versehenen Ende in bestimmten Stellungen der Wischarmschwenkbewegung unter Umständen einen ganz erheblichen Abstand von der Fahrzeugscheibe aufweist, was schon rein optisch nicht akzeptierbar wäre, aber auch einen sehr langen Hilfsarm 17 erforderlich machen könnte, wodurch zumindest die Stabilität des Scheibenwischers beeinträchtigt wäre.

In den Figuren 7 - 11 ist wiederum eine Fahrzeugscheibe in Form einer Panoramafrontscheibe, die zumindest an ihren beiden, jeweils einer sogenannten A-Säule des Fahrzeugs benachbarten Rändern 2 oder an dortigen Randbereichen 1.1 ("erste" Scheibenbereiche) an der Außenseite weit stärker konvex gekrümmt ist als in dem dazwischenliegenden Bereich 1.2 ("zweiter" Scheibenbereich). Der Krümmungsradius der Fahrzeugscheibe 1 im Randbereich 1.1 ist in der Figur 7 mit $R_1$ angegeben.

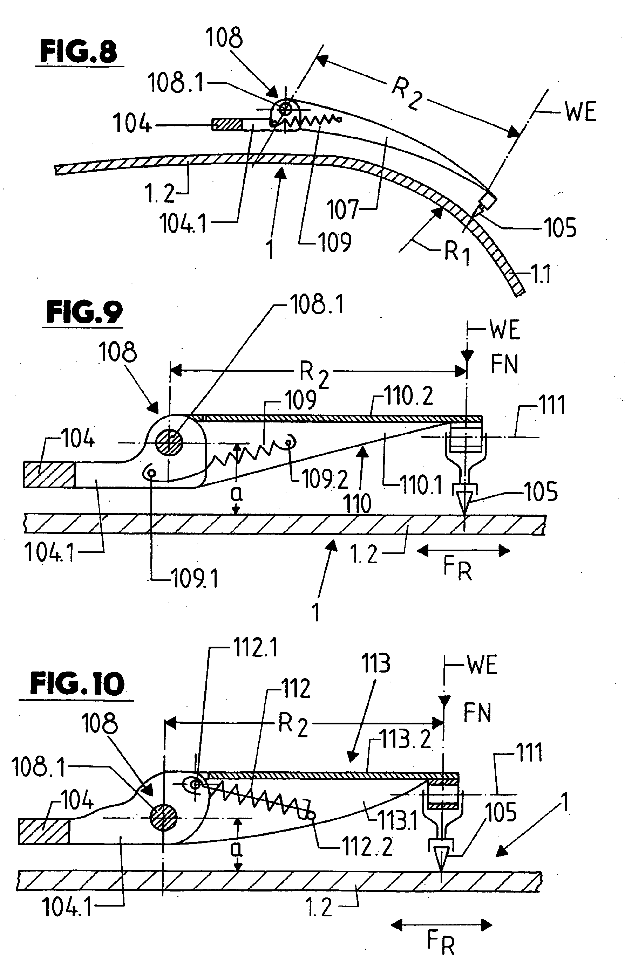

In der Figur 7 ist die Fahrzeugscheibe 1 nur teilweise dargestellt, so dass dort auch nur einer der beiden Randbereiche 1.1 wiedergegeben ist. Weiterhin ist die Fahrzeugscheibe 1, z.B. im Bereich 1.2, plan oder im Wesentlichen plan ausgebildet, wie dies in den Figuren 8 - 10 dargestellt ist.

Mit 103 ist allgemein ein Scheibenwischer bezeichnet, der Teil einer, z.B. zwei derartige Scheibenwischer 103 aufweisenden, Wischanlage ist und u.a. aus dem Wischarm 104 und dem Wischblatt 105 besteht. Der Wischarm 104 ist an einem Ende mit einer von einem Wischermotor reversierend angetriebenen Wischerwelle 106 verbunden, deren Achse die Wischerachse 106.1 definiert, um die der Wischarm 104 bei eingeschaltetem Wischermotor zwischen der in der Figur 7 dargestellten Parkstellung oder einer dieser benachbarten Stellung, in der das Wischblatt 105 gegen die Fahrzeugscheibe 1 im Bereich 1.2 bzw. am dortigen unteren Rand der Fahrzeugscheibe 1 anliegt, und einer Wende- oder Umkehrstellung bewegt wird, in der das Wischblatt 105 gegen den Randbereich 1.1 anliegt, wie dies auch in der Figur 8 dargestellt ist.

Um beim Schwenken des Wischarmes 104 einen optimalen Wischeffekt in allen vom Wischblatt 105 überstrichenen Bereichen des zwischen Parkstellung und Umkehrstellung gebildeten Wischfeldes zu erreichen, insbesondere auch im Randbereich 1.1, und um hierfür sicherzustellen, dass das Wischblatt 105 bzw. dessen Wischblattebene WE, die die Längserstreckung des Wischblattes 105 einschließt, stets möglichst die Normallage aufweisen, d.h. möglichst senkrecht zur Außenfläche der Fahrzeugscheibe orientiert sind, ist das Wischblatt 105 wiederum nicht unmittelbar am Wischarm 104 vorgesehen, sondern an einem Ende eines Hilfsarmes 107, der an seinem anderen Ende mit einem Gelenk 108 schwenkbar mit dem der Wischerwelle 106 entfernt liegenden freien Ende des Wischarmes 104 verbunden ist. Die Achse 108.1 des Gelenks 108 ist parallel oder annähernd parallel zur Fahrzeugscheibe 1 orientiert und in einer Ebene senkrecht oder nahezu senkrecht zur Wischerachse 106.1 angeordnet. Das Wischblatt 105 ist mittig mit dem Hilfsarm 107 verbunden. Selbstverständlich sind hier auch andere Ausführungen denkbar, beispielsweise auch ein Wischblatt, welches mit unterschiedlichen Längen beidseitig vom freien Ende des Hilfsarmes 107 wegsteht.

Bei den in den Figuren 7 und 8 dargestellten Ausführungsformen ist der Wischarm 104 an seinem der Wischerwelle 106 entfernt liegenden Ende mit einem abgewinkelten, über den Wischarmes 104 seitlich wegstehenden Abschnitt 104.1 versehen. An dem freien Ende dieses Abschnittes 104.1 befindet sich das Gelenk 108 und zwar in der Weise, dass der Hilfsarm 107 mit seiner Längserstreckung in Fortsetzung des Abschnittes 104.1 ebenfalls seitlich über den Wischarm 104 wegsteht und beim Bewegen des Wischarmes 104 aus der Parkstellung in Richtung Umkehrstellung gegenüber dem Wischarm 104 vorauseilt. Weiterhin ist bei der dargestellten Ausführungsform das Wischblatt 105 mit seiner Längserstreckung parallel oder annähernd parallel zur Schwenkachse 108.1 sowie auch parallel oder annähernd parallel zur Längserstreckung des Wischarmes 104 orientiert.

Durch eine zwischen dem Hilfsarm 107 und dem Abschnitt 104.1 wirkende Zugfeder 109 ist der Hilfsarm 107 im Sinne eines Schwenkens um die Schwenkachse 108.1 derart vorgespannt, dass das Wischblatt 105 bzw. dessen Wischzunge mit einer ausreichenden Kraft $F_N$ gegen die Fahrzeugscheibe 1 anliegen.

Der Hilfsarm 107 weiterhin über seine Länge leicht bogenförmig gekrümmt, und zwar der Krümmung des Randbereichs 1.1 entsprechend an seiner der Fahrzeugscheibe 1 zugewandten Unterseite konkav und an seiner der Fahrzeugscheibe abgewandten Oberseite konvex.

Bei eingeschalteter Wischanlage wird der Wischarm 104 so geschwenkt, dass sich der Abschnitt 104.1 und das dortige Gelenk 108 lediglich entlang des planen oder nur geringfügig gekrümmten Bereichs 1.2 der Fahrzeugscheibe 1 bewegen, sich also das Gelenk 108 und der Abschnitt 104.1 in der Umkehrstellung des Wischarmes 104 etwa am Übergang zwischen dem Bereichen 1.1 und 1.2 befinden, so dass der Wischarm 104 mit seinem den Hilfsarm 107 tragenden Ende bzw. die dortige Schwenkachse 108.1 während der gesamten Schwenkbewegung des Wischarmes 104 zwar einen ausreichenden, dennoch aber geringen Abstand a von der Fahrzeugscheibe 1 aufweist.

Mit $R_2$ ist in der Figur 8 der radiale Abstand bezeichnet, den die gegen die Fahrzeugscheibe 1 anliegende Wischlippe des Wischblattes 105 oder die Wischblattebene WE von der Schwenkachse 108.1 aufweist. $R_2$ ist damit auch der Radius, mit dem das Wischblatt 105 bzw. dessen Wischlippe um die Schwenkachse 108.1 gegen die Wirkung der Zugfeder 109 schwenkbar ist. Um bei der üblichen Ausbildung von Panoramascheiben einen optimalen Wischeffekt auch im Randbereich 1.1 zu erreichen, gleichzeitig aber die erforderliche Stabilität des Scheibenwischers 103 insgesamt sowie ein ausreichend großes Wischfeld zu gewährleisten, sind der Abstand bzw. Radius $R_2$ gleich oder etwa gleich einem Betrag A, wobei für A gilt:

$$A = (R1 + a) * ((1 - \cos\alpha) \ / \sin\alpha)$$

Hierbei sind

a der Abstand bzw. mittlere Abstand, den die Schwenkachse 108.1 von der Außenfläche des Bereichs 1.2 der Fahrzeugscheibe aufweist,

$R_1$ der Krümmungsradius oder - sofern der Randbereich 1.1 eine sich ändernde Krümmung mit unterschiedlichen Krümmungsradien aufweist - der Mittelwert dieser Krümmungsradien und

$\alpha$ der Winkel zwischen den Normalen auf die Fahrzeugscheibe 2 in der Parkstellung und der Umkehrstellung des Wischblattes, d.h. der Winkel zwischen der Normalen auf die Fahrzeugscheibe im Bereich 1.2 sowie im Bereich 1.1, und zwar im Bereich 1.1 dort, wo sich das Wischblatt 105 in der Umkehrstellung bzw. in seiner dem Scheibenrand 2 oder der A-Säule am nächsten liegenden Position befindet.

Der Winkel $\alpha$ ist dabei dann auch der Winkel, um den die Wischblattebene WE beim Überstreichen des Wischfeldes schwenkt.

Abweichungen in der Größenordnung von +/- 10% vom Betrag A sind für den Abstand $R_2$ möglich.

Die Figur 9 zeigt eine weitere mögliche Ausführungsform des Scheibenwischers 103, die (Ausführungsform) sich von der vorbeschriebenen Ausführungsform lediglich dadurch unterscheidet, dass der dem Hilfsarm 107 entsprechende Hilfsarm 110 im Wesentlichen geradlinig ausgebildet ist und im Bereich des Gelenks 108 als zur Fahrzeugscheibe 1 hin offenes U-Profil mit zwei Schenkeln 110.1 und einem diese Schenkel miteinander verbindenden Jochabschnitt 110.2 ist. Die Breite der Schenkel 110.1 nimmt ausgehend vom Gelenk 108 zum Wischblatt 105 hin ab. Mit den Schenkeln 110.1 ist der Hilfsarm 110 am Gelenk 108 bzw. an dem dieses Gelenk bildenden Gelenkbolzen gelagert. Die Angriffspunkte der Zugfeder 109, die mit einer Teillänge in dem zwischen den Schenkeln 110.1 gebildeten Raum aufgenommen ist, sind mit 109.1 (am Wischarm 104) bzw. mit 109.2 (am Hilfsarm 110) bezeichnet.

Das Wischblatt 105 ist in der üblichen Weise am freien Ende des Hilfsarmes 110 gehalten, und zwar bei der dargestellten Ausführungsform derart, dass es um eine Achse parallel zur Längserstreckung des Hilfsarmes 110 um einen kleinen Winkelbereich kipp- oder schwenkbar ist, wie dies in der Figur 9 mit der Linie 111 angedeutet ist.

Die Figur 10 zeigt eine Ausführungsform, die sich von der Ausführungsform der Figur 9 im Wesentlichen nur dadurch unterscheidet, dass anstelle der Zugfeder 109 eine Druckfeder 112 vorgesehen ist, die zwischen dem Abschnitt 104.1 des Wischarmes 104 und dem dem Hilfsarm 110 entsprechenden Hilfsarm 113 wirkt, der wiederum im Bereich des Gelenks 108 als zur Fahrzeugscheibe 1 hin offenes U-Profil mit den Schenkeln 113.1 und dem Jochabschnitt 113.2 ausgebildet ist. Die Angriffspunkte der Druckfeder 112 am Wischarm 104 bzw. am Hilfsarm 113 sind mit 112.1 bzw. 112.2 bezeichnet.

Während bei Verwendung der Zugfeder 109 der Abstand a, den die Schwenkachse 108.1 von der Fahrzeugscheibe 1 aufweist, größer ist als der Abstand des Angriffspunktes 109.1 von der Fahrzeugscheibe 1, sind die Verhältnisse bei Verwendung der Druckfeder 112 umgekehrt, d.h. der Abstand a ist kleiner als der Abstand des Angriffspunktes 112.1 von der Fahrzeugscheibe 1. Bei gleichem Scheibenabstand des Wischarmes 104 kann also bei dieser Ausführungsform bzw. bei Verwendung der Druckfeder 112 der Abstand a kleiner gewählt werden als bei der Ausführungsform mit der Zugfeder 109. Dies hat den Vorteil, dass das Moment $M_R$, welches um die Schwenkachse 108.1 beim Bewegen des Wischblattes 105 von der zwischen diesen Wischblatt 105 und der Fahrzeugscheibe 1 wirkenden Reibungskraft $F_R$ erzeugt wird und welches, insbesondere bei der Bewegung des Wischarmes aus der Umkehrstellung in Richtung Parkstellung, der Anpresskraft $F_N$ bzw. dem Moment entgegenwirkt, mit dem das Wischblatt 105 gegen die Fahrzeugscheibe 1 angepresst wird, extrem klein gehalten werden kann, da für dieses Moment $M_R$ gilt:

$$M_R = F_R * a.$$

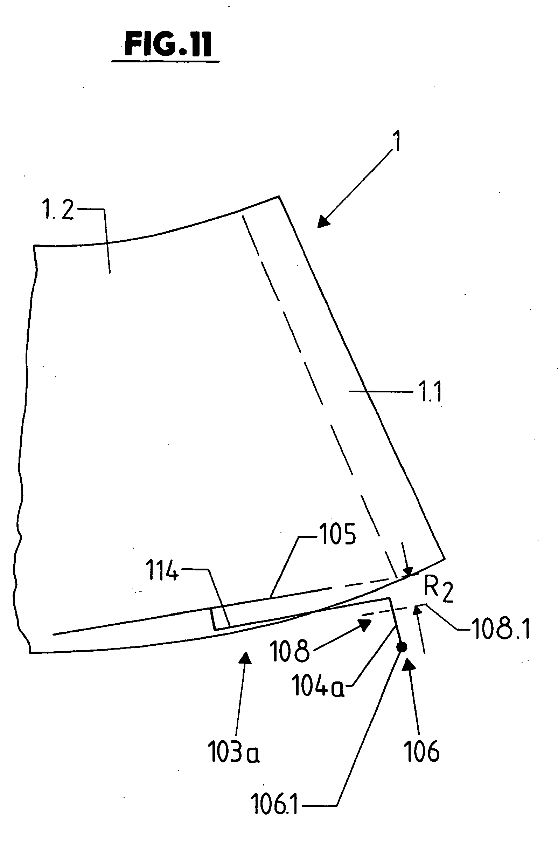

Die Figur 11 zeigt in sehr vereinfachter Darstellung die Fahrzeugscheibe 1 zusammen mit einem Scheibenwirscher 103a mit dem Wischblatt 105, dem extrem kurzen, mit der Wischerwelle 106 verbundenen Wischarm 104a sowie dem mittels des Gelenks 108 um die Schwenkachse 108.1 schwenkbar am Wischarm 104a gehaltenen Hilfsarm 114. Die Länge des Hilfsarmes 114 ist bei dieser Ausführung wesentlich größer als die Länge des Wischarmes 104a. Weiterhin sind Wischarm 104a und Hilfsarm 114 so geformt, dass sie ausgehend von der Wischerwelle 106 bis zum Wischblatt 105 bzw. bis zur Verbindung Wischblatt 105/Hilfsarm 114 gemeinsam eine in etwa S-förmige Struktur bilden, deren Enden einerseits mit der Wischerwelle 106 und andererseits mit dem Wischblatt 105 verbunden sind und in deren Verlauf eine größere Teillänge des Hilfsarmes 114 sich parallel oder annähernd parallel zur Längsachse des Wischblattes 105 erstreckt.

Der wirksame Abstand zwischen der Schwenkachse 108.1 und dem Wischblatt 105 ist wiederum mit $R_2$ bezeichnet und ist gleich oder annähernd gleich dem Krümmungsradius $R_1$.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegende Erfindungsgedanke verlassen wird.

So kann beispielsweise bei dem Scheibenwischer 3b anstelle der Stützrolle 21 auch ein anderes Abstützelement vorgesehen sein, beispielsweise ein an der Fahrzeugscheibe gleitendes Abstützelement in Form eines weiteren Wischblattes bzw. aus einem für Wischgummis verwendetem Material.

Vorstehend wurde bei der Beschreibung davon ausgegangen, dass sich das Wischblatt 5 in der Umkehrstellung im Bereich 1.1 der Scheibe 1 befindet. Selbstverständlich kann dies auch der Park- oder Ausgangsstellung entsprechen.

Weiterhin besteht beispielsweise die Möglichkeit, den Wischarm 104 bzw. 104a jeweils direkt mit der Wischerwelle 106 oder mit einem an der Wischerwelle 106 vorgesehenen Träger zu verbinden, oder aber den Wischarm 104 bzw. 104a an seinem der Wischerwelle 106 benachbarten Ende für ein Wegklappen von der Fahrzeugscheibe 1 in eine Serviceposition schwenkbar vorzusehen. Ein entsprechendes, dieses Wegklappen ermöglichendes Gelenk ist dann aber so ausgebildet, dass es eine definierte Endstellung beim Zurückklappen des Wischarmes aus der Serviceposition in Richtung Fahrzeugscheibe besitzt, so dass sich Wischarm 104 bzw. 104a und dessen den Wischerblattträger aufweisendes Ende auch bei dieser Ausführung beim Schwenken in einer vorgegebenen Ebene bewegen, die einen ausreichenden Abstand von der Fahrzeugscheibe 1 aufweist.

**Bezugszeichenliste**

| | |
|---|---|
| 1 | Panoramascheibe bzw. Fahrzeugscheibe |
| 1.1 | stark gewölbter Randbereich |
| 1.2 | Bereich der Fahrzeugscheibe zwischen den Randbereichen 1.1 |
| 2 | Scheibenrand (z.B. A-Säule) |
| 3, 3a, 3b | Scheibenwischer |
| 4 | Wischarm |
| 5 | Wischblatt |
| 6 | Gelenk |
| 6.1 | Feder |
| 7 | Wischarmträger |
| 8 | Wischwelle |
| 8.1 | Achse der Wischwelle oder Wischerachse |
| 9 | Gelenk |
| 9.1 | Schwenkachse |
| 10 | Hilfsarmträger |
| 11 | Gelenk |
| 11.1 | Schwenkachse |
| 12 | Steuerarm |
| 13 | Gelenk |
| 14 | Steuerarmträger |
| 15 | Gelenk |
| 15.1 | Schwenkachse |

| 16 | Gelenk |
| 16.1 | Schwenkachse |
| 17 | Wischblattträger, Hilfsarm |
| 18 | Feder |
| 19 | Wischfeld |
| 20 | Bewegungsbahn des Wischarmendes |
| 21 | Stützrolle |
| 22 | Ausleger |
| 23 | Längserstreckung (des Wischarmes) |
| 103, 103a | Scheibenwischer |
| 104, 104a | Wischarm |
| 105 | Wischblatt |
| 106 | Wischerwelle |
| 106.1 | Achse der Wischerwelle 6 oder Wischerachse |
| 107 | Hilfsarm oder Wischblattträger |
| 108 | Gelenk |
| 108.1 | Schwenkachse |
| 109 | Zugfeder |
| 109.1, 109.2 | Angriffspunkt der Zugfeder 9 |
| 110 | Hilfsarm |
| 110.1 | Schenkel |
| 110.2 | Jochabschnitt |
| 111 | Schwenkachse der Wischblatt-Befestigung |
| 112 | Druckfeder |
| 112.1, 112.2 | Angriffspunkt der Druckfeder 12 |
| 113 | Hilfsarm |
| **113.1** | Schenkel |
| 113.2 | Jochabschnitt |
| 114 | Hilfsarm |

| A | gesteuerte Schwenkbewegung des Hilfsarmträgers 10 um das Gelenk 9 |
| WE | Wischblattebene |
| $\alpha$ | spitzer Winkel |
| $\beta$ | spitzer Winkel |
| a | Abstand der Schwenkachse 108.1 von der Fahrzeugscheibe 1 |
| $F_N$ | Anpresskraft des Wischblattes gegen die Fahrzeugscheibe |
| $F_R$ | Reibungskraft zwischen Wischblatt und Fahrzeugscheibe |
| $R_1$ | Krümmungsradius der Fahrzeugscheibe im Randbereich 1.1 |
| $R_2$ | Schwenkradius des Wischblattes um die Schwenkachse 108.1 |

**Patentansprüche**

1.  Scheibenwischer für Fahrzeugscheiben, insbesondere für Panoramascheiben von Fahrzeugen, mit einem um wenigstens eine Wischerachse (8.1) zumindest zwischen einer Parkstellung und einer Umkehrstellung schwenkbaren Wischarm (4), mit wenigstens einem an einem Ende des Wischarmes (4) vorgesehenen Wischblatt (5), welches beim Schwenken des Wischarmes (4) ein Wischfeld (19) der Fahrzeugscheibe (1) überstreicht und welches an einem seitlich von dem Wischarm (4) wegstehenden Wischblattträger (17) angeordnet ist, wobei der Wischblattträger (17) um eine Schwenkachse (16.1) schwenkbar mit dem Wischarm (4) verbunden ist, sowie mit auf den Wischblattträger (17) einwirkenden ersten Federmitteln (18) zum Anpressen des Wischblattes (5) gegen die Fahrzeugscheibe (1),
    **dadurch gekennzeichnet,**
    **dass** der Wischblattträger (17) durch einen Steuerarm (12), der mit einem Ende auf den Wischblattträger (17) einwirkt und mit seinem anderen Ende fahrzeugseitig schwenkbar gelagert ist, gesteuert um eine weitere, parallel oder nahezu parallel zur Wischerachse (8.1) verlaufende Schwenkachse (9.1) schwenkbar ist. (Figur 1)

2.  Scheibenwischer für Fahrzeugscheiben, insbesondere für Panoramascheiben von Fahrzeugen, mit einem um wenigstens eine Wischerachse (8.1) zumindest zwischen einer Parkstellung und einer Umkehrstellung schwenkbaren Wischarm (4), mit wenigstens einem an einem Ende des Wischarmes (4) vorgesehenen Wischblatt (5), welches beim Schwenken des Wischarmes (4) ein Wischfeld (19) der Fahrzeugscheibe (1) überstreicht und welches an einem seitlich von dem Wischarm (4) wegstehenden Wischblattträger (17) angeordnet ist, wobei der Wischblattträger (17) um eine erste Schwenkachse (16.1) schwenkbar mit dem Wischarm (4) verbunden ist, sowie mit auf den Wischblattträger (17) einwirkenden ersten Federmitteln (18) zum Anpressen des Wischblattes (5) gegen die Fahrzeugscheibe (1),

**dadurch gekennzeichnet,**

**dass** die erste Schwenkachse (16.1) mit der Längserstreckung des Wischblattes (5) und/oder mit der Längserstreckung (23) des Wischarmes (4) einen spitzen Winkel ($\alpha$ bzw. $\beta$) einschließt. (Figur 3)

**3.** Scheibenwischer für Panoramascheiben (1) von Fahrzeugen,

mit wenigstens einem um wenigstens eine Wischerachse (106.1) zumindest zwischen einer Parkstellung und einer Umkehrstellung schwenkbaren Wischarm (104, 104a),

mit wenigstens einem an einem Ende des Wischarmes (104, 104a) vorgesehenen Wischblatt (105), welches beim Schwenken des Wischarmes (104, 104a) ein Wischfeld überstreicht, das zumindest einen, z.B. im Bereich einer A-Säule des Fahrzeugs, stärker gekrümmten ersten Scheibenbereich (1.1), beispielsweise Randbereich, sowie einen zweiten Scheibenbereich (1.2) mit einer gegenüber dem ersten Scheibenbereich (1.1) reduzierten Krümmung einschließt,

mit einem vom Wischarm (104) wegstehenden Wischblattträger (107, 110, 113, 114), an dem das wenigstens eine Wischblatt (105) angeordnet ist und der um eine Schwenkachse (108.1) schwenkbar mit dem Wischarm (104) verbunden ist, sowie

mit auf den Wischblattträger (107, 110, 113) einwirkenden ersten Federmitteln (109, 112) zum Anpressen des wenigstens einen Wischblattes (105) gegen die Fahrzeugscheibe (1),

**dadurch gekennzeichnet,**

**dass** der radiale Abstand $R_2$ zwischen der einen Schwenkachse (108.1) des Wischblattträgers (107, 110, 113, 114) und dem wenigstens einen Wischblatt (105) gleich oder etwa gleich dem Betrag A = (R1 + a) $^{*}$ ((1 - cos$\alpha$) / sin $\alpha$) ist, hierbei sind

a der Abstand oder mittlere Abstand der Schwenkachse (108.1) vom zweiten Scheibenbereich (1.2),

$R_1$ der Krümmungsradius oder mittlere Krümmungsradius des ersten Scheibenbereichs (1.1), und

$\alpha$ der Winkel zwischen den Normalen auf die Fahrzeugscheibe (1) in der Parkstellung und Umkehrstellung des Wischblattes(105),

wobei der radiale Abstand $R_2$ beispielsweise einen Wert von 0,9 - 1,1 des Betrages A aufweist.

**4.** Scheibenwischer für Fahrzeugscheiben, insbesondere für Panoramascheiben von Fahrzeugen, mit einem um wenigstens eine Wischerachse (8.1) zumindest zwischen einer Parkstellung und einer Umkehrstellung schwenkbaren Wischarm (4), mit wenigstens einem an einem Ende des Wischarmes (4) vorgesehenen Wischblatt (5), welches beim Schwenken des Wischarmes (4) ein Wischfeld (19) der Fahrzeugscheibe (1) überstreicht und welches an einem seitlich von dem Wischarm (4) wegstehenden Wischblattträger (17) angeordnet ist, wobei der Wischblattträger (17) um eine Schwenkachse (16.1) schwenkbar mit dem Wischarm (4) verbunden ist, sowie mit auf den Wischblattträger (17) einwirkenden ersten Federmitteln (18) zum Anpressen des Wischblattes (5) gegen die Fahrzeugscheibe (1),

**dadurch gekennzeichnet,**

**dass** am Wischarm (4) ein gegen die Fahrzeugscheibe (1) anliegendes und **dadurch** den Abstand zwischen der Fahrzeugscheibe (1) und Wischarm (4) definierendes Abstützelement (21) vorgesehen ist.

**5.** Scheibenwischer nach Anspruch 1, 3 oder 4, **dadurch gekennzeichnet, dass** die eine Schwenkachse (16.1, 108.1) quer zur Wischbewegung orientiert ist.

**6.** Scheibenwischer nach Anspruch 1, 3 oder 4, **dadurch gekennzeichnet, dass** die eine Schwenkachse (16.1, 108.1) parallel oder annähernd parallel zur Längserstreckung des Wischblattes (5, 105) orientiert ist.

**7.** Scheibenwischer nach Anspruch 2, 3 oder 4, **dadurch gekennzeichnet, dass** der Wischblattträger (17) durch einen Steuerarm (12), der mit einem Ende auf den Wischblattträger (17) einwirkt und mit seinem anderen Ende fahrzeugseitig schwenkbar gelagert ist, gesteuert um die weitere, parallel oder nahezu parallel zur Wischerachse (8.1) verlaufende Schwenkachse (9.1) schwenkbar ist.

**8.** Scheibenwischer nach Anspruch 1, 3 oder 4, **dadurch gekennzeichnet, dass** die Schwenkachse (16.1) mit der Längserstreckung des Wischblattes (5) und/oder mit der Längserstreckung (23) des Wischarmes (4) einen spitzen

Winkel ($\alpha$ bzw. $\beta$) einschließt.

9. Scheibenwischer nach einem der Ansprüche 1, 2 oder 4 - 8, **dadurch gekennzeichnet, dass** der radiale Abstand $R_2$ zwischen der einen Schwenkachse (16.1, 108.1) des Wischblattträgers (17, 107, 110, 113, 114) und dem wenigstens einen Wischblatt (5, 105) gleich oder etwa gleich dem Betrag A = (R1 + a)* ((1 - cos$\alpha$) / sin $\alpha$) ist, hierbei sind
a der Abstand oder mittlere Abstand der Schwenkachse (18.1, 108.1) vom zweiten Scheibenbereich (1.2),
$R_1$ der Krümmungsradius oder mittlere Krümmungsradius des ersten Scheibenbereichs (1.1), und
$\alpha$ der Winkel zwischen den Normalen auf die Fahrzeugscheibe (1) in der Parkstellung und Umkehrstellung des Wischblattes(5, 105),
wobei der radiale Abstand $R_2$ beispielsweise einen Wert von 0,9 - 1,1 des Betrages A aufweist.

10. Scheibenwischer nach einem der Ansprüche 1 - 3 oder 5 - 9, **dadurch gekennzeichnet, dass** am Wischarm (4) ein gegen die Fahrzeugscheibe (1) anliegendes und **dadurch** den Abstand zwischen der Fahrzeugscheibe (1) und Wischarm (4) definierendes Abstützelement (21) vorgesehen ist.

11. Scheibenwischer nach Anspruch 4 oder 10, **dadurch gekennzeichnet, dass** das Abstützelement eine Rolle (21) ist.

12. Scheibenwischer nach einem der Ansprüche 4,10 oder 11, **dadurch gekennzeichnet, dass** das Abstützelement (21) an dem den Wischarmträger (17) aufweisenden Ende des Wischarmes (4) vorgesehen ist.

13. Scheibenwischer nach einem der vorhergehenden Ansprüche, **dadurch gekennzeichnet, dass** die eine Schwenkachse (16.1) gegenüber der Längserstreckung des Wischblattes (5) derart verdreht ist, dass sie schräg zur Oberfläche der Fahrzeugscheibe (1) innerhalb des Wischfeldes (19) orientiert ist.

14. Scheibenwischer nach einem der vorhergehenden Ansprüche, **dadurch gekennzeichnet, dass** der Wischarm (4, 104, 104a) an einer Wischerwelle (8, 106) oder an einem an der Wischerwelle (8, 106) vorgesehenen Wischarmträger (7) derart gehalten ist, dass sich das mit dem Wischblattträger (17, 107, 110, 113, 114) verbundene Ende des Wischarmes (4, 104, 104a) beim Schwenken des Wischarmes (4, 104, 104a) in einer Ebene (20) bewegt, die rechtwinklig zu der Wischerachse (8.1, 106.1) bzw. zu der Achse der Wischerwelle (8, 106) orientiert ist.

15. Scheibenwischer nach einem der vorhergehenden Ansprüche, **dadurch gekennzeichnet, dass** der Wischarm (4, 104, 104a) mit einem dem Wischblattträger (17, 107, 110, 113, 114) entfernt liegenden Ende unmittelbar an einer Wischwelle (8, 106) befestigt ist, deren Achse die Wischerachse (8.1, 106.1) ist.

16. Scheibenwischer nach einem der vorhergehenden Ansprüche, **dadurch gekennzeichnet, dass** die eine und/oder die weitere Schwenkachse (16.1 108.1; 9.1) von wenigstens einem ersten bzw. zweiten Gelenk (16, 9, 108) gebildet sind.

17. Scheibenwischer nach einem der vorhergehenden Ansprüche, **dadurch gekennzeichnet, dass** der Wischblattträger (17) um die eine Schwenkachse (16.1) schwenkbar an einem Träger (10) gehalten ist, welcher seinerseits um die weitere Schwenkachse (9.1) schwenkbar mit dem Wischarm (4) verbunden ist und an welchem der Steuerarm (12) angreift.

18. Scheibenwischer nach einem der vorhergehenden Ansprüche, **dadurch gekennzeichnet, dass** die weitere Schwenkachse (9.1) sowie Schwenkachsen (11.1, 15.1) des Steuerarmes (12) parallel zueinander sowie auch parallel zur wenigstens einen Wischerachse (8.1) orientiert sind.

19. Scheibenwischer nach einem der vorhergehenden Ansprüche, **dadurch gekennzeichnet, dass** der Wischarm (4, 104, 104a) an seinem dem Wischblattträger (17, 107, 110, 113, 114) entfernt liegenden Ende über ein drittes Gelenk (6) an einem Wischarmträger (7) angelenkt ist, und zwar für ein Heranschwenken des Wischarmes (4, 104, 104a) an die Fahrzeugscheibe (1) sowie für ein Wegschwenken des Wischarmes (4, 104, 104a) von der Fahrzeugscheibe (1), und dass zweite Federmittel (6.1) vorgesehen sind, die den Wischarm (4, 104, 104a) in Richtung Fahrzeugscheibe vorspannen.

20. Scheibenwischer nach Anspruch 19, **dadurch gekennzeichnet, dass** der Steuerarm (12) an seinem dem Wischblattträger (17) entfernt liegenden Ende ebenfalls über ein Gelenk (13) an einem Steuerarmträger (14) angelenkt ist, und zwar für ein Heranschwenken an die Fahrzeugscheibe (1) sowie für ein Wegschwenken von der Fahrzeugscheibe.

21. Scheibenwischer nach Anspruch 19 oder 20, **dadurch gekennzeichnet, dass** Anschlagmittel vorgesehen sind, die das Schwenken des Wischarmes (4, 104, 104a) um die Achse des dritten Gelenks (6) in Richtung Fahrzeugscheibe (1) derart begrenzen, dass der durch die zweiten Federmittel (6.1) in Richtung Fahrzeugscheibe vorgespannte Wischarm (4, 104, 104a) beim Schwenken über seine gesamte Länge von der Fahrzeugscheibe (1) beabstandet ist.

22. Scheibenwischer nach Anspruch 21, **dadurch gekennzeichnet, dass** die Anschlagmittel an den über das Gelenk (6) miteinander verbundenen Enden des Wischarmes (4) und des Wischarmträgers (7) vorgesehen, insbesondere angeformt sind.

23. Scheibenwischer nach einem der vorhergehenden Ansprüche, **dadurch gekennzeichnet, dass** der Wischblattträger ein Schwenk- oder Hilfsarm (17, 107, 110, 113, 114) ist, der an einem Ende das wenigstens eine Wischblatt (5, 105) trägt und an seinem anderen Ende über das die eine Schwenkachse (16.1, 108.1) bildende Gelenk (16, 108) schwenkbar mit dem Wischarm (4, 104, 104a) in Verbindung steht.

24. Scheibenwischer nach einem der vorhergehenden Ansprüche, **dadurch gekennzeichnet, dass** das wenigstens eine Wischblatt (105) mit seiner Längserstreckung parallel oder nahezu parallel zu der einen Schwenkachse (108.1) des Wischblattträgers (107, 110, 113, 114) orientiert ist.

25. Scheibenwischer nach einem der vorhergehenden Ansprüche, **dadurch gekennzeichnet, dass** der Wischarm (104, 104a) um die wenigstens eine Wischerachse (106.1) derart schwenkbar ist, dass sich die Schwenkachse (108.1) des Wischblattträgers (107, 110, 113) oder eine diese Schwenkachse bildende Gelenkanordnung (108) am Übergang oder in der Nähe des Übergangs zwischen dem ersten und dem zweiten Scheibenbereich (1.1, 1.2) befindet, wenn sich das Wischblatt in seiner der A-Säule des Fahrzeugs am nächsten liegenden Stellung befindet.

26. Scheibenwischer nach Anspruch 25, **dadurch gekennzeichnet, dass** sich in der Parkstellung oder Umkehrstellung die Schwenkachse (108.1) des Wischblattträgers (107, 110, 113) am zweiten Scheibenbereich (1.2) in unmittelbarer Nähe des Übergangs zum ersten Scheibenbereich (1.1) befindet.

27. Scheibenwischer nach einem der vorhergehenden Ansprüche, **dadurch gekennzeichnet, dass** der Wischblattträger (17, 107, 110, 113, 114) an dem wenigstens einen Wischblatt (5, 105) derart angeordnet ist, dass das wenigstens eine Wischblatt (5, 105) beim Überstreichen des Wischfeldes in Richtung vom zweiten Scheibenbereich (1.2) zum ersten Scheibenbereich (1.1) dem Wischarm (4, 104, 104a) vorauseilt.

28. Scheibenwischer nach einem der vorhergehenden Ansprüche, **dadurch gekennzeichnet, dass** der radiale Abstand ($R_2$) zwischen der einen Schwenkachse (16.1, 108.1) des Wischblattträgers (17, 107, 110, 113) und dem wenigstens einen Wischblatt (5, 105) kleiner ist als die Länge des Wischarmes (4, 104).

29. Scheibenwischer nach einem der vorhergehenden Ansprüche, **dadurch gekennzeichnet, dass** der wenigstens eine Hilfsarm (114) eine Länge aufweist, die größer ist als die Länge des Wischarmes (104a).

30. Scheibenwischer nach einem der vorhergehenden Ansprüche, **dadurch gekennzeichnet, dass** die ersten Federmittel von wenigstens einer zwischen dem Wischblattträger (17, 107, 110, 114) und dem Wischarm (4, 104, 104a) wirkenden Zugfeder (18, 109) gebildet sind.

31. Scheibenwischer nach einem der vorhergehenden Ansprüche, **dadurch gekennzeichnet, dass** die ersten Federmittel zum Anpressen des Wischblattes (105) gegen die Fahrzeugscheibe (1) von wenigstens einer zwischen den Wischblattträger (113) und dem Wischarm (10) wirkenden Druckfeder (112) gebildet sind.

32. Scheibenwischer nach Anspruch 31, **dadurch gekennzeichnet, dass** der Abstand (a) der Schwenkachse (108.1) des Wischblattträgers (113) von der Fahrzeugscheibe (1) kleiner ist als der Abstand, den der Angriffspunkt (112.1) der Druckfedermittel (112) am Wischarm (104) von der Fahrzeugscheibe (1) aufweist.

33. Scheibenwischer nach einem der vorhergehenden Ansprüche, **dadurch gekennzeichnet, dass** der den Wischblattträger bildende wenigstens eine Hilfsarm (107, 110, 113) mit seiner Längserstreckung radial oder nahezu radial zu der einen Schwenkachse (108.1) und/oder radial oder nahezu radial zur Längserstreckung des wenigstens einen Wischblattes (105) orientiert ist.

34. Scheibenwischer nach einem der vorhergehenden Ansprüche, **dadurch gekennzeichnet, dass** sich der wenigstens eine Hilfsarm (114) mit einer Teillänge in Richtung der Längserstreckung des wenigstens einen Wischblattes (105) erstreckt, beispielsweise parallel oder annähernd parallel zur Längserstreckung des wenigstens einen Wischblattes orientiert ist.

FIG.1

EP 1 707 459 A2

# FIG.2

# FIG.4

# FIG.6

# FIG.3

**FIG.5**

# FIG.7

1

1.2

1.1

107(110,113)

105

R$_2$

106.1

108.1

104.1

103

104

106

**FIG.8**

**FIG.9**

**FIG.10**

# FIG.11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 853516 A